# EUROPEAN PATENT APPLICATION

(11) **EP 2 343 894 A1**
(43) Date of publication of application: **13.07.2011**
(21) Application number: 11150370.2
(22) Date of filing: 07.01.2011
(51) Int. Cl.: H04N 7/20, H04H 40/90

(54) **Broadcast distribution apparatus and method of use thereof**

(30) Priority: 07.01.2010 GB 1000212
(71) Applicant: Pace Plc, Saltaire Shipley West Yorkshire BD18 3LF (GB)
(72) Inventor: Holme, Richard, Shipley, BD18 3LF (GB)
(74) Representative: Hemingway, Christopher Paul

(57) **Abstract**

Apparatus and method for distributing broadcast data signals comprising broadcast receiving means for receiving satellite data signals, and converting the modulation of the data signals from a first scheme compatible with satellite set-top boxes into a more spectrally efficient second scheme, the data signals then being distributed to one or more satellite set-top boxes, wherein adapter means are provided for at least one satellite set-top box to convert the modulation of the data signals from the second scheme to the first scheme.

## Description

The invention to which this application relates is apparatus for distributing broadcast signals such as satellite television and a method of use thereof.

Although the following description refers almost exclusively to distribution of satellite television, it will be appreciated by persons skilled in the art that the present invention can be used to distribute other material.

It is known to provide television systems including set top boxes (STBs) for receiving digital data in the form of one or more data streams from one or more broadcasters via satellite, terrestrial and/or cable communication means. The STBs process and decode the received data signals to generate audio, visual and/or auxiliary data therefrom. Data streams transmitted at different frequencies from the broadcaster(s) typically correspond to different services such as different television channels. The television system typically includes a display screen for displaying the generated visual data and speakers for sounding the generated audio data.

Satellites transmitting the broadcasts typically carry digital TV signals in the range 10.7GHz to 12.750GHz (though other ranges are possible). They also carry 2 signals in this frequency range, which are logically separated by polarisation (horizontal and vertical).

Both signal ranges are split into a number of Radio Frequency (RF) channels, typically of around 40MHz bandwidth. Each RF channel (or transponder) carries an MPEG transport stream which consists of multiplexed digital TV services. A network information table (NIT) is carried within the transport stream, which contains satellite delivery system descriptors, which describe the RF frequencies (and modulation parameters) of all of the RF channels carried by the satellite.

In contrast, a coaxial cable connecting the STB to the satellite dish typically carries satellite digital TV signals in the frequency range 950MHz to 2150MHz. Below 950MHz are carried terrestrial TV (both analogue and digital TV) and cable TV signals. These signals are typically carried by RF channels of 8MHz bandwidth in the UK.

Not all installations of coaxial cable are able to carry signals up to 2150MHz, as cable capability varies based on type of cable, length of cable run and number of RF splitters etc. For example, in some buildings the coaxial cabling is only able to carry signals up to 860MHz.

As such the frequency range that a coaxial cable is capable of carrying is narrower than the range in which TV signals are transmitted by satellites.

Digital TV is typically transmitted by satellites using a modulation scheme known as quadrature phase shift keying (QPSK). This is less spectrally efficient than the quadrature amplitude modulation (QAM) scheme used by digital cable TV, which is typically 64-QAM or 256 QAM. The more spectrally efficient a modulation scheme is, the more digital TV services it can carry (with the same quality as before), in the same amount of bandwidth.

In a single user distribution scheme, the STB is connected to the satellite dish via a coaxial cable. The low noise block (LNB) connected to the satellite dish transfers the received satellite signal to the coaxial cable.

Since the coaxial cable cannot carry polarised signals, the low noise block (LNB) in the satellite receiver must select one of the polarisations. The STB tells the LNB which band to provide by transmitting (or not) a DC voltage.

Since each RF channel received from the satellite is at too high a frequency for the coaxial cable, the LNB must shift the RF spectrum down in frequency to an intermediate frequency (IF).

However, the RF spectrum on the satellite is typically too wide to fit entirely on the coaxial cabling, so the LNB must split the satellite RF spectrum into two bands (high and low). The STB tells the LNB which band to provide on the coaxial cable by transmitting (or not) a 22kHz tone.

Hence the LNB passes one of 4 quadrants (vertical high, vertical low, horizontal high, horizontal low), as selected by the STB. As described above, each quadrant contains multiple RF channels of typically 40MHz bandwidth, and QPSK modulated, with no change to the NIT.

The problem with this distribution method is that only one STB can be connected to the LNB using a single coaxial cable. This distribution method does not support extra STBs or dual tuner STBs such as personal video recorders (PVRs) without additional coaxial cabling between the STBs and the LNB. In most multi-dwelling units (MDUs), extra cabling is to be avoided, as it increases installation cost and multiple cables can be physically hard to route through the building.

One possible multi-user distribution scheme is known as Satellite Channel Router (SAT-CR) wherein the STB is connected via a coaxial cable to a SAT-CR switch, which in turn is connected to the LNB and satellite dish. This allows up to 32 STBs to share the same coaxial cable, though most commercial implementations are at the lower end of this range.

The STB tells the SAT-CR switch which RF channel it requires from the satellite by sending it a DiSEqC message. DiSEqC messages are carried on a modulated 22kHz tone. The SAT-CR switch passes this RF channel and frequency shifts it down to the coaxial cable frequencies.

Each STB is assigned a unique frequency range (user band) on the coaxial cable, which its requested RF channel is shifted down to. As before each RF channel is approximately 40MHz in bandwidth, QPSK modulated and there is no change to the NIT (or any other part of the transport stream data).

However, the problem with this distribution scheme is that it still only allows a limited number of STBs to receive digital TV services on the same coaxial cable. In addition, there can also be problems in that multiple users are unable to request different RF channels at the same time, due to collision of DiSEqC messages.

Another multi-user distribution scheme is known as Transmodulation Distribution wherein the STB is connected by coaxial cable to a transmodulator, which in turn is connected to the LNB and satellite dish.

In this scheme, each QPSK modulated satellite RF channel is shifted down in frequency and transmodulated to a digital cable modulation scheme, such as 64-QAM or 256-QAM. This is advantageous because the alternate modulation scheme is much more spectrally efficient, hence many more satellite transponders can be squeezed onto the coaxial cable.

As all of the transponders used by a particular broadcaster can typically be transmodulated onto the same coaxial cable, there is no limit to the number of users that may be supported, and there is no requirement for any signalling between the STB and transmodulator as there is no selection of which portion of the satellite signal is to be switched due to all portions being transmodulated.

However in order to receive the cable modulation scheme signals, a cable STB is required rather than a satellite STB, to be able to demodulate the signal. This can be a disadvantage for broadcasters as they have to support an inventory of two different STBs.

In addition, as a result of transmodulation (and no-switched operation) the NIT is changed to use cable delivery system descriptors (at the new frequency and modulation parameters), rather than satellite delivery system descriptors.

Furthermore, some satellite RF channels cannot easily be transmodulated to cable STB compliant signals, because they contain more data than can be carried on a 256-QAM signal fitted within a typical 8MHz cable channel. This then limits the modulation parameters that the broadcaster uses on the satellite, potentially preventing them from moving to a more spectrally efficient satellite RF channel modulation scheme, such as DVB-S2, and ultimately preventing them from adding more digital TV services or migrating to high definition (HD).

An aim of the present invention is to provide a distribution apparatus which allows the full range of satellite services to be distributed to a larger number of satellite STBs compared to what is already known.

In an aspect of the invention, there is provided broadcast distribution apparatus comprising:
broadcast receiving means for receiving satellite data signals and converting the modulation of the data signals from a first scheme into a second scheme;
said satellite data signals distributable to one or more set-top boxes such that a display may be generated therefrom;
**characterised in that** adapter means are provided for at least one set-top box to convert the modulation of the data signals from the second scheme to the first scheme.

In one embodiment, the first scheme is a satellite modulation scheme such as quadrature phase shift keying (QPSK). It will be appreciated that other schemes could be used which fall within the Digital Video Broadcasting Satellite Second Generation specification (DVB-S2), such as 8-PSK which is a higher order phase shift keying modulation compared to QPSK.

Typically the set-top boxes are capable of receiving and demodulating data signals modulated according to the first scheme. In other words they are satellite set-top boxes.

Typically the second scheme is more spectrally efficient than the first scheme.

In one embodiment, the second scheme is a cable modulation scheme such as quadrature amplitude modulation (QAM).

Thus QPSK modulated satellite data signals are converted into QAM-modulated cable signals for distribution via cable to satellite STBs, whereupon the adapter converts the QAM-modulated cable signals back into the satellite STB-compatible QPSK modulated satellite data signals.

Advantageously, the full satellite signal range can be transmitted via the cable network by making use of the higher spectral efficiency of QAM modulation compared to QPSK modulation on the cable, which would not normally be able to carry the full signal range under QPSK modulation. This means that there is no requirement to replace existing satellite STBs with cable STBs or install additional cabling when the number of users is increased. In addition, the adapter allows the system to be transparent to the user, in that their satellite STB appears to function as normal.

In one embodiment the broadcast receiving means is a headend unit which supplies the data signals to the STBs via coaxial cable.

In one embodiment the data signals include a network information table (NIT) describing the frequencies and modulation parameters of channels carried by the signal.

In one embodiment the adapter means determines modulation parameters from the NIT.

In one embodiment the broadcast receiving means generates a mapping table associating channels modulated by the first scheme with channels modulated by the second scheme. Typically the mapping table also associates the modulation parameters of the first scheme with the modulation parameters of the second scheme. Thus satellite RF channels and modulation parameters are associated with cable RF channels and modulation parameters, without altering the satellite NIT.

In one embodiment the adapter means includes cable signal demodulator means and satellite signal modulator means. Typically the adapter means is capable of converting multiple signal modulations between cable and satellite simultaneously.

Typically the adapter means includes communication means for sending and/or receiving messages from the STB. Typically the communication means includes a DiSEqC receiver and/or a mapping table receiver. It will be appreciated that other communication means or protocols could be used, e.g. Ethernet, DOCSIS, MoCA, USB, and the like.

Typically the adapter means is responsive to messages from the STB such that when a DiSEqC request for a satellite RF channel is received from the STB, the adapter tunes to a corresponding cable RF channel according to a mapping table, and remodulates the cable signal to a satellite signal which is output to the STB as a satellite RF channel.

In one embodiment the broadcast receiving means is capable of demultiplexing, multiplexing and/or remultiplexing the satellite data signals received. Thus the services on one satellite RF channel may be spread over one or more cable RF channels.

Advantageously this allows the apparatus to deal with signals of which the modulation cannot be easily be converted from the first scheme into the second scheme, as may occur when there is too much data that can be carried within a channel under the second modulation scheme. Under such circumstances the channel can be split to allow the modulation of each of the parts under the second scheme.

A further advantage is that two subsets of different satellite channels may be combined into one cable RF channel.

In a further aspect of the invention, there is provided a method of distributing broadcast data signals comprising:
receiving satellite data signals via broadcast receiving means;
converting the modulation of the data signals from a first scheme into a second scheme;
distributing said satellite data signals to one or more set-top boxes such that a display may be generated therefrom;
**characterised in that** the modulation of the data signals is converted from the second scheme to the first scheme via adapter means associated with the set-top boxes.

Typically the adapter means scans the data signals for a mapping table.

Typically the set-top box (STB) tunes to a predetermined frequency to obtain a satellite network information table (NIT).

In one embodiment when a user requests a television service, the STB looks up the service in the NIT to determine the satellite channel carrying the service, and transmits a message to the adapter means.

Typically the adapter means receives a mapping table generated by the broadcast receiving means to determine which channel modulated by the second scheme is associated with the satellite channel requested and modulated by the first scheme.

Typically the adapter tunes to the channel modulated by the second scheme and converts the signal modulation from the second scheme to the first scheme for output to the STB.

Thus the system enables digital video services to be provided to end-users using a smaller amount of bandwidth than current distribution systems compatible with satellite STBs. This enables the carrying of a full suite of satellite TV services to a large number of users, on a single coaxial cable and to satellite STBs, where previous systems were unable to do this without using a cable STB or limiting the number of users.

Advantageously the broadcaster does not have to hold an inventory of both cable and satellite STBs, in order to provide a service to multiple configurations of households (single dwellings, small apartments, large multidwelling units) including those using a common shared cable distribution system.

Specific embodiments of the invention are now described wherein:-

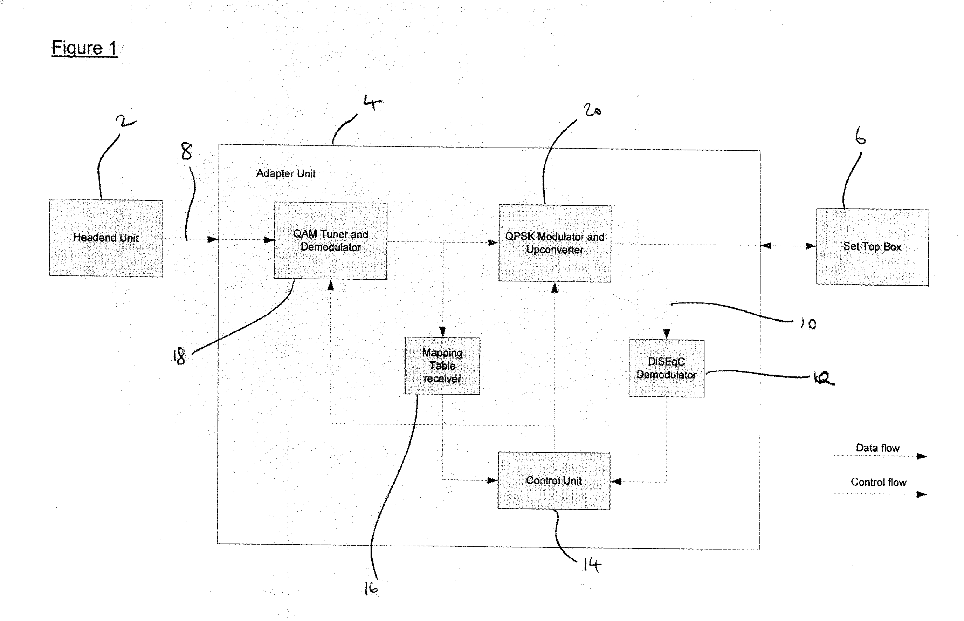

Figure 1 illustrates broadcast distribution apparatus according to an embodiment of the invention.

With reference to Figure 1, there is illustrated broadcast distribution apparatus comprising broadcast receiving means for receiving satellite data signals in the form of a headend unit 2 and adapter means 4 for a set-top box 6.

The headend unit supplies the digital TV signal to a distribution coaxial cable 8. The headend unit acts as a transmodulator, converting the satellite QPSK RF channels into cable QAM RF channels. However, unlike a normal transmodulator, it does not alter the satellite NIT. Instead, it generates and transmits a mapping table to the adapter unit 4, associating the satellite RF channels in the NIT with the cable RF channels being output by the headend unit. The mapping table also associates the modulation parameters of the satellite RF channels with the transmodulated coaxial cable RF channels.

Each satellite STB is associated with an adapter unit 4, which converts the QAM signal carried on the coaxial cable back to a QPSK signal, compatible with the satellite STB, using the information carried in the mapping table. In this embodiment the adapter unit has a single QAM to QPSK converter path consisting of a cable demodulator 18 and a QPSK modulator 20. The adapter unit also contains a DiSEqC receiver 12, a mapping table receiver 16, and a control unit 14.

In this embodiment, the satellite STB runs in a SAT-CR capable mode, wherein the user configures the user-band that the STB is to use.

The adapter unit scans the input frequency spectrum to find a mapping table to determine the cable RF channels output by the headend unit and the STB tunes to a predefined 'home' frequency to acquire a satellite NIT.

When the user tunes to a TV service, the following steps occur:
1. STB looks up the service in the NIT (which is the unmodified Satellite NIT) to determine which satellite RF channel carries the service.
2. STB forms a SAT-CR DiSEqC message containing the satellite RF channel and the user band on which it wants to receive it.
3. STB transmits 10 the DiSEqC message to the adapter unit.
4. DiSEqC Demodulator 12 in the adapter 4 receives the DiSEqC message.
5. Control unit 14 decodes the DiSEqC message and determines the requested satellite RF channel.
6. Mapping Table Receiver 16 collects the mapping table transmitted from the headend unit.
7. Control unit 14 looks up the requested satellite RF channel in the mapping table, to determine the equivalent cable RF channel.
8. Control unit tells the QAM Demodulator 18 to tune to the cable RF channel.
9. Control unit 14 looks up the requested satellite RF channel in the mapping table, to determine the requested RF channel's modulation parameters.
10. Control unit tells the QPSK Modulator 20 to use the requested RF channel's modulation parameters.
11. Control unit decodes the DiSEqC message back to a requested user-band.
12. Control unit looks up the requested user-band in the user band frequency table, to determine a user band RF frequency.
13. Control unit tells the QPSK Modulator to output at the user band RF frequency.
14. When the QAM demodulator is locked to the cable RF channel, it outputs a transport stream, which is then modulated by the QPSK modulator.
15. STB tunes to its requested user-band and receives the requested TV service.

A benefit of the invention is that steps 1-3 occur in a regular, known SATCR implementation.

Of course there may be other DiSEqC commands in the SAT-CR protocol which the adapter unit must understand other than just the tune message.

In addition, some DiSEqC protocols may use a pre-programmed known user-band frequency, because the SAT-CR DiSEqC protocol does not contain this information. However, other Frequency translation protocols may contain this information, and therefore steps 11 and 12 may change to reflect the same. The mapping table can be transmitted to the adapter by any communication means, such as being carried on a private data PID on all transport streams output by the headend unit on the coaxial cable, which could replace some of the stuffing packets.

Alternative communication means include 'out-of-band' signalling, a predetermined channel dedicated to broadcasting headend data, or a bi-directional communication channel such as DOCSIS.

Futhermore, the adapter unit may have more than one QAM to QPSK converter path, for example to support multiple STBs, or support Dual tuner STBs such as PVRs.

The signalling from STB to adapter unit may be by any means such as other DiSEqC protocols, Ethernet, DOCSIS, MoCA, USB.

In step 9, the mapping table does not necessarily need to contain the modulation parameters of the satellite RF channels, as it would be possible for the adapter unit to determine these from other sources, such as the satellite NIT.

Also step 8 is only necessary because the SAT-CR DiSEqC protocol does not transmit these parameters. The STB knows these parameters as they are in the satellite NIT.

In a further embodiment the mix of digital TV services on the cable RF output channels may be varied from the satellite RF input channels, the advantage of which is two fold.

Firstly, only the services which a specific broadcaster provides need be provided on the cable RF output channels, thus minimising bandwidth usage on the coaxial cable.

Secondly it is not always possible for satellite RF channels to be transmodulated to cable RF channels because the amount of data transmitted on them exceeds that of the cable RF channel.

By allowing the TV services on one satellite RF channel to be spread over two cable RF channels, this limitation is removed. Also a subset of TV services from two different satellite RF channels may be combined into one cable RF channel.

In this embodiment, the headend unit acts as a DVB headend, remultiplexing services from input to output and regenerating the necessary DVB-SI tables on each output (for example NIT, BAT, SDT, PAT, PMT, EIT).

Again, a 'mapping table' is used to instruct the adapter how to reverse the transmodulation applied by the headend.

Thus satellite STBs may be connected transparently to either a satellite feed, or an adapter connected to a cable distribution network. The satellite STB receives an unmodified satellite NIT, as required to operate correctly, in either case. However, when satellite signals are transmitted via a cable network, they are transmodulated into a cable modulation scheme for transport to the satellite STB where the transmodulation is reversed to ensure that the full range of services is accessible simultaneously by a large number of users.

It will be appreciated by persons skilled in the art that the present invention may also include further additional modifications made to the device which does not affect the overall functioning of the device.

## Claims

1. Broadcast distribution apparatus comprising:
broadcast receiving means for receiving satellite data signals and converting the modulation of the data signals from a first scheme into a second scheme;
said satellite data signals distributable to one or more set-top boxes such that a display may be generated therefrom;
**characterised in that** adapter means are provided for at least one set-top box to convert the modulation of the data signals from the second scheme to the first scheme.

2. Broadcast distribution apparatus according to claim 1 wherein the first scheme is a satellite modulation scheme.

3. Broadcast distribution apparatus according to claim 1 or 2 wherein the set-top boxes are capable of receiving and demodulating data signals modulated according to the first scheme.

4. Broadcast distribution apparatus according to any preceding claim wherein the second scheme is more spectrally efficient than the first scheme.

5. Broadcast distribution apparatus according to any preceding claim wherein the second scheme is a cable modulation scheme.

6. Broadcast distribution apparatus according to any preceding claim wherein the broadcast receiving means is a headend unit which supplies the data signals to the set-top boxes via coaxial cable.

7. Broadcast distribution apparatus according to any preceding claim wherein the data signals include a network information table describing the frequencies and modulation parameters of channels carried by the signal.

8. Broadcast distribution apparatus according to claim 7 wherein the adapter means determines modulation parameters from the network information table.

9. Broadcast distribution apparatus according to any preceding claim wherein the broadcast receiving means generates a mapping table associating channels modulated by the first scheme with channels modulated by the second scheme.

10. Broadcast distribution apparatus according to claim 9 wherein the mapping table associates the modulation parameters of the first scheme with the modulation parameters of the second scheme.

11. Broadcast distribution apparatus according to any preceding claim wherein the adapter means includes communication means for sending and/or receiving messages from the set-top box.

12. A method of distributing broadcast data signals comprising:
receiving satellite data signals via broadcast receiving means;
converting the modulation of the data signals from a first scheme into a second scheme;
distributing said satellite data signals to one or more set-top boxes such that a display may be generated therefrom;
**characterised in that** the modulation of the data signals is converted from the second scheme to the first scheme via adapter means associated with the set-top boxes.

13. A method according to claim 12 wherein the set-top box tunes to a predetermined frequency to obtain a satellite network information table.

14. A method according to claim 13 wherein each set-top box is operable to allow a user to request a television service, and on doing so the set-top box looks up the service in the network information table to determine the satellite channel carrying the service and transmits a message to the adapter means.

15. A method according to claim 14 wherein the adapter means receives a mapping table to determine which channel modulated by the second scheme is associated with the satellite channel requested and modulated by the first scheme.
